# EUROPÄISCHE PATENTANMELDUNG

(11) **EP 4 654 424 A1**
(43) Veröffentlichungstag der Anmeldung: **26.11.2025**
(21) Anmeldenummer: 24177955.2
(22) Anmeldetag: 24.05.2024
(51) Int. Cl.: H02J 7/00, H01M 10/44

(54) **VERFAHREN ZUM DURCHFÜHREN EINER TIEFENENTLADUNG EINER BATTERIE MITTELS EINER TIEFENENTLADUNGSVORRICHTUNG, COMPUTERPROGRAMMPRODUKT, COMPUTERLESBARES SPEICHERMEDIUM SOWIE TIEFENENTLADUNGSVORRICHTUNG**

(71) Anmelder: Siemens Aktiengesellschaft, 80333 München (DE)
(72) Erfinder: Baldauf, Manfred, 91056 Erlangen (DE); Bellut, Lukas, 97737 Gemünden am Main (DE); Chan, Hoon Seng, 91052 Erlangen (DE); Fischer, Michael, 91320 Ebermannstadt (DE); Katzer, Felix, 90763 Fürth (DE); Radinger, Hannes, 90459 Nürnberg (DE); Schmid, Arthur, 80337 München (DE); Schricker, Barbara, 91058 Erlangen (DE)
(74) Vertreter: Siemens Patent Attorneys

(57) **Zusammenfassung**

Die Erfindung betrifft ein Verfahren zum Durchführen einer Tiefenentladung (16) einer Batterie (12) mittels einer Tiefenentladungsvorrichtung (10), mit den Schritten: Bereitstellen der Batterie (12) mit einem entleerten Ladezustand (V_{SoC0%}); Anlegen eines vorgegebenen ersten Entladestroms (18) an die entleerte Batterie (12) mittels einer elektronischen Recheneinrichtung (14) der Tiefenentladungsvorrichtung (10) bis zu einem vorgegebenen ersten Spannungswert (20) der Batterie (12); Umpolen der Batterie (12) mittels der Tiefenentladungsvorrichtung (10) bei Erreichen des vorgegebenen ersten Spannungswerts (20); und Anlegen eines zweiten Entladestroms (18) bei umgepolter Batterie (12) bis zu einem vorgegebenen zweiten Spannungswert (22), wobei der zweite Spannungswert (22) ein negativer Spannungswert ist, mittels der elektronischen Recheneinrichtung (14).

Ferner betrifft die Erfindung ein Computerprogrammprodukt, ein computerlesbares Speichermedium sowie eine Tiefenentladungsvorrichtung (10).

## Beschreibung

Die nachfolgende Erfindung betrifft ein Verfahren zum Durchführen einer Tiefenentladung einer Batterie mittels einer Tiefenentladungsvorrichtung gemäß dem geltenden Patentanspruch 1. Ferner betrifft die Erfindung ein Computerprogrammprodukt, ein computerlesbares Speichermedium sowie eine Tiefenentladungsvorrichtung.

Das sichere und effiziente Recyceln von Batterien ist ein Thema von wachsender Bedeutung angesichts des steigenden Einsatzes in elektrischen Geräten und der wachsenden Zahl an Elektroautos. Nachfolgend wird der Begriff Batterie für einzelne Zellen sowie Zellverbünde als auch Batteriemodul oder -pack verwendet. Unter den verschiedenen Schritten des Recyclingprozesses spielt die Demontage der Batterie, die oft automatisiert mithilfe eines Zerkleinerers beziehungsweise Schredders stattfindet, vor dem eigentlichen Rückgewinnungsprozess der Rohmaterialien mittels hydro- und pyrometallchirurgischer Verfahren eine wichtige Rolle. Werden die Batterien ohne beziehungsweise ohne kontrollierte Deaktivierung dem Zerkleinerungsprozess zugeführt, so ergeben sich zwei zentrale Probleme.

Von Lithium-basierten Batterien können bei unsachgemäßer Behandlung Gefahren ausgehen. Bei dem mechanischen Bearbeitungsschritt der Zerkleinerung wird noch in der Batterie gespeicherte Energie schlagartig frei, was zum Beispiel zu Bränden und Explosionen führen kann. Dies stellt somit ein Sicherheitsrisiko für das Personal und die vom Recycler verwendeten Maschinen dar. Soll ein großes Batteriepack händisch in kleinere Moduleinheiten zerlegt werden, ist ein mehrstufiger, in der Regel manuell stattfindender Demontageprozess notwendig. Beim Lösen von Schrauben, Öffnen von Deckeln, Freilegen von Kabeln und Kontakten kann sich die Energie der Batterie unkontrolliert entladen. Dadurch besteht ein Risiko für das verarbeitende Personal, zum Beispiel durch einen elektrischen Schlag.

Des Weiteren weist jede Batterie, auch beim Ladezustand von null Prozent, einen nicht zu vernachlässigenden Anteil an Restenergie auf. Wenn keine kontrollierte elektrische Entnahme dieser Energie aus der Batterie stattfindet, wird die Restenergie in Wärme umgesetzt. Dabei wird eine Rückspeisung der Energie ins Gebäude- und das weiterführende Stromnetz oder den Antriebszwischenkreis zur Batterieentladung für Analysemessungen verpasst.

Eine Möglichkeit zur Entnahme der Restenergie ist die sogenannte Tiefenentladung. Dabei werden die Batterien mit bestehender Restspannung beispielsweise in die Fabrikhalle des Recyclers angeliefert und an eine Leistungselektronik zur Entladung angeschlossen. Bei Kenntnis des Batterietyps und des Datenblatts kann in der Regel gefahrlos bis zur unteren Spannungsgrenze entladen werden. Weiterhin wird dann mit derselben Stromstärke in einem kontinuierlichen Verfahren auf einen niedrigeren Spannungswert, zum Beispiel null Volt, entladen. Dieser Prozess wird über eine konstante Stromstärke gesteuert. Der niedrigere Spannungswert aus dem vorhergehenden Schritt von beispielsweise null Volt kann über einen bestimmten Zeitraum gehalten werden, um eine gründlichere Entladung der Batterie zu erreichen. Die Batterie wird vom Anschluss an die Leistungselektronik befreit, um dem weiteren Recyclingprozess zugeführt zu werden. Dabei relaxiert die Spannung der Batterie wieder auf einen deutlich positiven Wert.

Während der Verbleib von restlicher Energie für eine Einzelzelle kein Problem darstellen mag, können sich die Einzelspannungen von seriell verschalteten Zellen im Modul beziehungsweise Pack zu einer gefährlichen Gesamtspannung addieren. Die bisher durchgeführte Tiefenentladung schafft noch keine sichere Bedingung für die Weiterverwendung. Mögliche Gefahren wie Stromschläge bei Berührung, Brände durch thermisches Durchgehen oder Explosionen beim Schreddern oder bei der manuellen Demontage bleiben weiterhin bestehen.

Insbesondere bei einer elektrischen Deaktivierung vor der Weiterverarbeitung wird die Batterie vom Recycler mithilfe von Leistungselektronik bis zur Entladeschlussspannung von null Volt entladen, wie bereits beschrieben. Es hat sich jedoch gezeigt, dass dadurch nicht die gesamte Restenergie aus der Batterie entnommen werden kann, was beispielsweise anhand der zu positiven Werten relaxierenden Spannung deutlich wird. Sicherheitsrisiken für Mensch und Maschine bleiben daher bestehen.

Um dies zu vermeiden, werden die Pole einer Einzelzelle beziehungsweise die Kontakte/BUS-Bars eines Moduls/Packs unmittelbar nach der Entladung beziehungsweise bei Erreichen einer Entladeschlussspannung kurzgeschlossen. Da durch die unzureichende Tiefenentladung jedoch nicht die gesamte Energie der Batterie entnommen wurde, entsteht bei einem manuellen Kurzschlussverfahren Wärme, die vor allem bei zahlreichen Zellen im Verbund einen kritischen Zustand erreichen und thermisches Durchgehen provozieren kann.

Ein entladenes und kurzgeschlossenes Modul weist zwar an den Modulkanten eine Spannung von null Volt auf. Einzelne Zellen der Serienschaltung innerhalb des Moduls können aufgrund von folgenden Asymmetrien trotzdem noch eine Restspannung besitzen. Der sogenannte Ladezustand (State of Charge, SoC) kann innerhalb der Batterien unterschiedlich sein, so kann eine Entladung bei konstanter Stromstärke dazu führen, dass einzelne Zellen unkontrolliert umpolen, also eine Entladung in den negativen Spannungsbereich stattfindet. Durch diese Umpolung entstehen chemische Reaktionen, wie zum Beispiel die Zersetzung des Elektrolyts. Des Weiteren können die Batterien unterschiedliche Alterungszustände aufweisen. Nicht alle Batterien in einer Batterie altern gleich schnell. Eine Abweichung von Material- und Produktionseigenschaften sowie die Platzierung der Batterie im Modul wirken sich unterschiedlich auf den Gesundheitszustand der Batterie aus, zum Beispiel gibt es Abweichungen im Restelektrolytgehalt der Batterie.

Beide Punkte führen dazu, dass einige Batterien in einer Batterie schneller die untere Spannungsgrenze des Tiefenentladungsverfahrens erreichen beziehungsweise sie unterschreiten, also umpolen, sofern die untere Spannungsgrenze von null Volt oder kleiner ist. Dadurch erwärmt sich das Modul, was Gefahren eines thermischen Durchgehens birgt. Außerdem können Batterien plötzlich einen unendlich hohen Widerstand aufweisen, zum Beispiel wenn das Current Interrupt Device durch zu hohen Druck innerhalb der Batterie ausgelöst wurde. Bei in Serie verschalteten Batterien, die Teil des Stromkreises sind, entsteht dadurch ein offener Stromkreis und es kann keine Energie mehr aus den Batterien entnommen werden, die Teil des Stromkreises sind. Als Konsequenz wäre eine manuelle Demontage eines solchen Moduls ein Sicherheitsrisiko für das Personal sowie beim Recycler eingesetzte Maschinen.

Aufgabe der vorliegenden Erfindung ist es, ein Verfahren, ein Computerprogrammprodukt, ein computerlesbares Speichermedium sowie eine Tiefenentladungsvorrichtung zu schaffen, mittels welchen eine verbesserte Tiefenentladung der Batterie realisiert werden kann.

Diese Aufgabe wird durch ein Verfahren, ein Computerprogrammprodukt, ein computerlesbares Speichermedium sowie eine Tiefenentladungsvorrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Durchführen einer Tiefenentladung einer Batterie mittels einer Tiefenentladungsvorrichtung. Es erfolgt das Bereitstellen der Batterie mit einem entleerten Ladezustand. Es wird ein vorgegebener erster Entladestrom an die entleerte Batterie mittels einer elektronischen Recheneinrichtung der Tiefenentladungsvorrichtung bis zu einem vorgegebenen ersten Spannungswert der Batterie angelegt. Es erfolgt dann das Umpolen der Batterie mittels der Tiefenentladungsvorrichtung bei Erreichen des vorgegebenen Spannungswerts und das Anlegen eines zweiten Entladestroms bei umgepolter Batterie bis zu einem vorgegebenen zweiten Spannungswert, wobei der zweite Spannungswert ein negativer Spannungswert ist, mittels der elektronischen Recheneinrichtung.

Insbesondere kann somit mithilfe dieses Verfahrens bei der Tiefenentladung von Batterien gezielt ein interner Kurzschluss ausgebildet werden. In der Folge wird die Batterie vollständig entladen. Nach Entfernen der Batterie von der zur Entladung verwendeten Leistungselektronik ist die Batterie restenergielos, sodass diese beim Zerkleinern oder Demontieren kein Sicherheitsrisiko darstellen kann. Dieser interne Kurzschluss wird ausgebildet durch eine kontrollierte Umpolung der Batterie in den negativen Spannungsbereich, also einer Batteriespannung von kleiner null Volt.

Insbesondere ist die entleerte Batterie durch die Schlussspannung aus dem Datenblatt definiert, bei welchem ein Ladezustand von null Prozent der Batterie zu verzeichnen ist. Jedoch weist die Batterie bei null Prozent Ladezustand, was dem entleerten Ladezustand entspricht, weiterhin eine entsprechende Restenergie auf. Insbesondere wird somit nach Erreichen der Schlussspannung, insbesondere nach vorgegebenem Datenblatt, der vordefinierten Entladestrom auf eine vordefinierte zweite Schlussspannung entladen. Dabei findet die Umpolung der Batterie statt. Als sogenannte Entladeschlussspannung kann hier insbesondere die maximal gewünschte negative Schlussspannung gewählt werden. Durch die kontrollierte Tiefenentladung mit Umpolung der Batterie ergeben sich insbesondere Unterschiede zum Stand der Technik. Insbesondere wiederansteigende Spannungen, sogenannte Spannungsirritationen, die zu einer Gefahrensituation bei der Weiterverarbeitung nach der Tiefenentladung der Batterien führen, können vermieden werden. Dies schützt die menschlichen Mitarbeiter und die Maschinen in der Recycling-Fabrik.

Deaktivierte Batterien müssen nicht mehr isoliert oder geschützt gelagert oder transportiert werden, zum Beispiel in dafür vorgesehenen Containern der richtigen Schutzklasse. Der Transport und das Handling innerhalb und außerhalb der Fabrikhallen sind mit stark reduzierter Gefährdung möglich. Da die Batterien über keine Restspannung mehr verfügen, handelt es sich beim Transport nicht mehr um Gefahrengut.

Ein Kurzschluss der Batterie zur Erreichung von null Volt ist nicht mehr nötig, da die hier vorgeschlagene Tiefenentladung mit Umpolung zur nahezu vollständigen Deaktivierung führt. Gefahren durch gezielte Kurzschlüsse bei einer Haltespannung von null Volt oder höher, zum Beispiel unkontrollierbare Temperaturerhöhung, werden vermieden. Die Restspannungen der Batterie bewegen sich nahe null Volt, daher ist ein Kurzschluss von Modul/Pack nicht mehr zwingend notwendig. Sollte dieser dennoch aus Sicherheitsgründen erfolgen, entstehen dabei keine gefährlichen hohen Temperaturen, kein Funkenflug oder thermisches Durchgehen.

Ferner kann die Umpolung in mehreren Teilschritten, individuell abgestimmt auf die Eigenschaften der Batterie, erfolgen, auch bei mehreren Entladeschlussspannungen im negativen Spannungsbereich. Durch den individuell einstellbaren Deaktivierungsprozess wird ein thermisches Durchgehen aufgrund unkontrolliert ablaufender chemischer Reaktionen, Transportprozessen oder strombedingter Erhitzung vermieden. Eine Weiterverarbeitung, beispielsweise im Schredder-Prozess, kann erfolgen, ohne dass es im Modul/Pack zu einer schlagartigen Entladung der Spannung, die zu Feuer oder Explosion führen kann, kommt.

Gemäß einer vorteilhaften Ausgestaltungsform wird als erster Spannungswert im Wesentlichen null Volt vorgegeben. Mit anderen Worten wird die Batterie bis zu null Volt tiefenentladen und dann bei einem Übergang von null Volt eine Umpolung durchgeführt. Somit kann ein negativer Spannungswert erreicht werden, wodurch die Batterie zuverlässig in Richtung des zweiten Spannungswerts entladen werden kann. Somit kann zuverlässig eine Entladung der Batterie realisiert werden.

Weiterhin vorteilhaft ist, wenn als zweiter Spannungswert im Wesentlichen eine negative Schlussspannung der Batterie vorgegeben wird. Insbesondere wird nun eine negative Schlussspannung angelegt. Wird nun die Batterie so weit entladen, bis die negative Schlussspannung anliegt, kann beispielsweise auch nach einem Relaxieren der Batterie eine Restenergie innerhalb der Batterie verhindert werden.

Es hat sich weiterhin als vorteilhaft erwiesen, wenn nach Erreichen des zweiten Spannungswerts eine Relaxation der Batterie durchgeführt wird. Insbesondere wird somit während der Relaxationsphase kein Entladestrom an die Batterie angelegt. Die Batterie relaxiert dabei und verliert dabei beispielsweise entsprechend Wärme, welche beim Anlegen des Entladestroms zu verzeichnen war. Auf Basis dessen stellt sich wiederum eine neue Spannung ein. Nach dem Relaxieren kann somit überprüft werden, ob eine vollständige Entladung der Batterie durchgeführt wurde.

Es hat sich weiterhin als vorteilhaft erwiesen, wenn nach der Relaxation ein dritter Spannungswert der relaxierten Batterie bestimmt wird. Insbesondere kann der dritte Spannungswert somit nach dem Relaxieren, insbesondere nach einem vorgegebenen Zeitwert der Relaxation, bestimmt werden. Damit kann überprüft werden, ob die Batterie vollständig entladen ist.

In einer weiteren vorteilhaften Ausgestaltung ist vorgesehen, sollte der dritte Spannungswert einen vorgegebenen Schwellwert überschreiten, wird erneut ein Entladestrom angelegt und eine Umpolung beim Erreichen des ersten Spannungswerts durchgeführt. Insbesondere bei gealterten Batterien kann es vorkommen, dass nach dem Durchführen einer ersten Tiefenentladung und dem Relaxieren entsprechend Restenergie innerhalb der Batterie zu verzeichnen ist. Sollte nun der Spannungswert überschritten werden, so kann erneut ein Entladestrom angelegt werden und insbesondere erneut bis zum zweiten Spannungswert oder einem weiteren Spannungswert tiefenentladen werden. Somit kann im Wesentlichen sichergestellt werden, dass die Batterie entleert ist.

Dabei kann weiterhin vorgesehen sein, dass auch nach dem zweiten Entladungsschritt erneut die Batterie relaxiert und erneut ein relaxierter Spannungswert gemessen wird. Dies kann insbesondere so oft durchgeführt werden, bis die Batterie im Wesentlichen eine Restenergie von null aufweist.

Weiterhin vorteilhaft ist, wenn mit einer C-Rate zwischen 0,1 C und 2,0 C, insbesondere mit 0,5 C, die Batterie entladen wird. Die C-Rate ist dabei insbesondere abhängig von dem maximal möglichen Entladestrom der Batterie. 1C bedeutet dabei insbesondere, dass die gesamte Energie der Batterie, insbesondere im Ladezustand zwischen null und 100 Prozent, innerhalb einer Stunde entnommen wurde. Durch die Entladung zwischen 0,1 C und 2,0 C, insbesondere mit 0,5 C, kann insbesondere sichergestellt werden, dass eine thermische Reaktion innerhalb der Batterie verhindert ist. Somit kann zuverlässig eine Tiefenentladung der Batterie realisiert werden.

Eine weitere vorteilhafte Ausgestaltungsform sieht vor, dass mittels der Tiefenentladungsvorrichtung die Batterie vor der Tiefenentladung bis zum entleerten Ladezustand entladen wird. Mit anderen Worten sollte die Batterie nicht komplett entleert geliefert werden, wobei entleert hierbei insbesondere bedeutet null Prozent des Ladezustands, so kann mittels der Tiefenentladungsvorrichtung beispielsweise vorher der Ladezustand überprüft werden, und eine Entladung bis zu null Prozent, insbesondere in den entleerten Ladezustand, durchgeführt werden. Somit kann im Anschluss daran sicher das Tiefenentladungsverfahren durchgeführt werden.

Weiterhin vorteilhaft ist, wenn mit einer C-Rate zwischen 0,5 C und 3 C, insbesondere mit 1 C, die Batterie entladen wird. Somit können entsprechende Erwärmungen der Batterie während des Entladevorgangs verhindert werden.

Gemäß einer weiteren vorteilhaften Ausgestaltungsform ist vorgesehen, dass zumindest während der Tiefenentladung eine Temperatur der Batterie überwacht wird. Hierzu können beispielsweise entsprechende Temperatursensoren beziehungsweise eine Wärmebildkamera eingesetzt werden, um die Temperatur zu überwachen. Somit kann beispielsweise verhindert werden, dass während der Tiefenentladung ein thermisches Durchgehen zu verzeichnen ist. Sollte die Temperatur entsprechend einen Schwellwert überschreiten, so kann beispielsweise der Entladestrom während der Tiefenentladung entsprechend reduziert werden. Sollte die Temperatur nicht überschritten werden, so kann auch der Entladestrom entsprechend erhöht werden, wodurch schneller die Tiefenentladung durchgeführt werden kann.

Es hat sich weiterhin als vorteilhaft erwiesen, wenn bei Erreichen des zweiten Spannungswerts der zweite Spannungswert für einen vordefinierten Zeitraum gehalten wird. Insbesondere kann somit beispielsweise die Schlussspannung im negativen Bereich über einen vordefinierten Zeitraum gehalten werden, um eine entsprechende Entleerung der Batterie durchführen zu können. Im Anschluss daran kann insbesondere eine Relaxationsphase anschließen.

Ferner hat es sich als vorteilhaft erwiesen, wenn vor dem Durchführen der Tiefenentladung ein Gesundheitszustand der Batterie bestimmt und kategorisiert wird und in Abhängigkeit von dem bestimmten Gesundheitszustand die Tiefenentladung durchgeführt wird. Insbesondere kann somit, bevor die Tiefenentladung mit Umpolen der Batterie zum internen Kurzschluss durchgeführt wird, eine optionale Sicherheitsbewertung des Prozesses stattfinden. Dabei wird insbesondere der sogenannte State of Health (SoH - Gesundheitszustand) der Batterie und/oder gezielt von einzelnen Batterien der Batterie abgeschätzt sowie der Zellinnenwiderstand bestimmt. Dies kann beispielsweise über eine Kapazitätsbestimmung, eine Innenwiderstandsbestimmung oder auch über eine elektrochemische Impedanzmessung durchgeführt werden. Alle oben genannten Messverfahren liefern eine Datengrundlage, um zu entscheiden, ob eine Batterie dem hier vorgeschlagenen Tiefenentladungsverfahren mit Umpolung unterzogen werden kann. Die Entscheidung, ob die Batterie in Ordnung oder nicht in Ordnung ist, kann aufgrund eines einzelnen Parameters oder mehreren Parametern in Kombination getroffen werden. Es hat sich dabei gezeigt, dass eine einfache Bestimmung des State of Health auf Basis von Kapazitätsdaten keine hinreichende Aussage über die Entladeeigenschaften der Batterie gibt. Auch Batterien mit einem höheren State of Health können beispielsweise bei hohen Innenwiderständen Probleme bei der Tiefenentladung mit Umpolung bereiten. Das beschriebene Verfahren ist allerdings optional und kann auch als unabhängiger Aspekt der Erfindung betrachtet werden. Es können auch alle Batterien dem Tiefenentladungsverfahren mit Umpolung unterzogen werden. Allerdings ist dabei nicht gewährleistet, dass das Verfahren erfolgreich ist. Dabei kann insbesondere die Batterie in gesund, gealtert oder korrupt eingestuft werden. Sollte die Batterie als gesund oder gealtert eingestuft werden, so kann das Verfahren durchgeführt werden. Sollte die Batterie als korrupt eingestuft werden, so ist das Verfahren insbesondere nicht durchzuführen.

Insbesondere können somit auch in Abhängigkeit von dem Gesundheitszustand die C-Raten und Schlussspannungen der Tiefentladung gewählt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit dem Computerprogrammprodukt.

Ein nochmals weiterer Aspekt der Erfindung betrifft eine Tiefenentladungsvorrichtung zum Durchführen einer Tiefenentladung einer Batterie, mit zumindest einer elektronischen Recheneinrichtung, wobei die Tiefenentladungsvorrichtung zum Durchführen eines Verfahrens nach dem vorhergehenden Aspekt ausgebildet ist. Insbesondere wird das Verfahren mittels der Tiefenentladungsvorrichtung durchgeführt.

Vorteilhafte Ausgestaltungsformen des Verfahrens sind als vorteilhafte Ausgestaltungsformen des Computerprogrammprodukts, des computerlesbaren Speichermediums sowie der Tiefenentladungsvorrichtung anzusehen. Die Tiefenentladungsvorrichtung weist hierzu insbesondere gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- FIG 1: ein schematisches Blockschaltbild gemäß einer Ausführungsform einer Tiefenentladungsvorrichtung; und
- FIG 2: ein schematisches Spannungs-Strom-Zeitdiagramm während der Durchführung einer Tiefenentladung gemäß dem erfindungsgemäßen Gedanken.

In den Figuren sind gleiche oder funktionsgleiche Elemente mit den gleichen Bezugszeichen versehen.

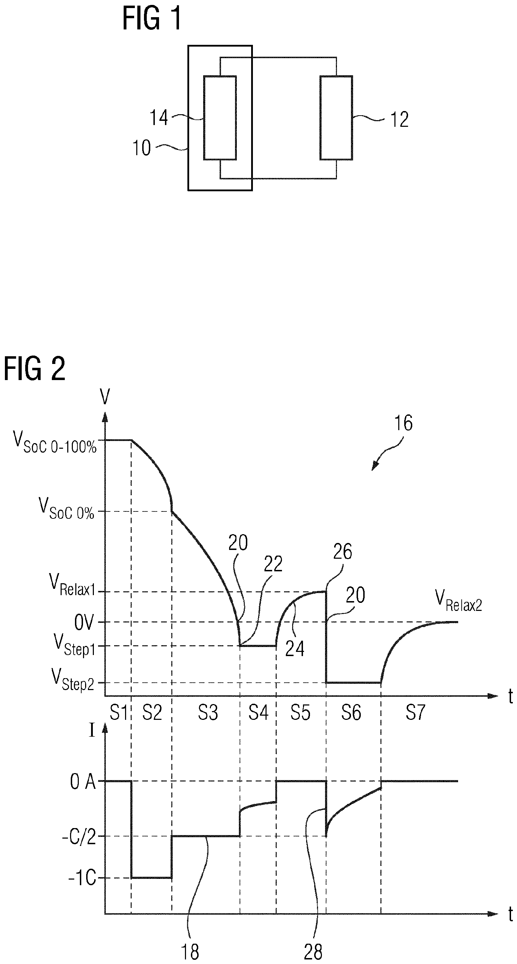

FIG 1 zeigt ein schematisches Blockschaltbild gemäß einer Ausführungsform einer Tiefenentladungsvorrichtung 10. Die Tiefenentladungsvorrichtung 10 ist zum Tiefenentladen einer Batterie 12 ausgebildet. Hierzu weist die Tiefenentladungsvorrichtung 10 zumindest eine elektronische Recheneinrichtung 14 auf. Ferner weist die Tiefenentladungsvorrichtung 10 eine Umpolungseinrichtung auf. Diese ist vorliegend insbesondere lediglich als Software in der elektronischen Recheneinrichtung 14 beispielhaft ausgebildet. Die Umpolungseinrichtung kann jedoch auch mechanisch, beispielsweise in Form von Schaltelementen, realisiert werden.

Mittels der Tiefenentladungsvorrichtung 10 kann insbesondere ein Verfahren zum Durchführen einer Tiefenentladung 16 (FIG 2) durchgeführt werden.

FIG 2 zeigt ein Spannungs V-Strom I-Zeit t-Diagramm. Im oberen Teil der FIG 2 ist insbesondere ein Zeit-Spannungsdiagramm gezeigt, während in dem unteren Teil ein Zeit-Stromdiagramm gezeigt ist. Hierbei sind insbesondere sieben unterschiedliche Zeitschritte S1 bis S7 gezeigt, welche sowohl den Stromverlauf als auch den Spannungsverlauf entsprechend anzeigen.

Die FIG 2 zeigt somit den schematischen Ablauf einer Tiefenentladung mit mehreren Umpolungsschritten. Im ersten Zeitschritt S1 wird beispielsweise die Batterie 12 mit einer enthaltenen Restspannung V_{Soc0bis100%} in der Fabrikhalle des Recyclers angeliefert und an die Tiefenentladungsvorrichtung 10 zur elektrischen Deaktivierung angeschlossen. Der State of Charge (SoC) beträgt dabei zwischen null Prozent, was insbesondere vollständig entladen bedeutet, und 100 Prozent, was insbesondere vollständig geladen bedeutet. Mit einer definierten Stromstärke, zum Beispiel 1 C wird innerhalb der Spezifikation der Batterie 12 im zweiten Zeitschritt S2 die Batterie 12 bis zu einer Spannung V_{SoC0%} entladen, bei der es sich um die untere Spannungsgrenze der Batterie 12 laut Datenblatt handelt. Die maximale Stromstärke richtet sich nach dem im Datenblatt verzeichneten tolerierbaren Strom. Ist für bestimmte Batterien 12 eine starke Temperaturerhöhung nach diesem Verfahren zu erwarten, kann die Stromstärke für diesen Schritt bereits niedriger gewählt werden. Dadurch erwärmt sich die Batterie 12 weniger stark, sodass keine längeren Pausen zum Dissipieren der entstandenen Wärme gemacht werden müssen. Dies verhindert ein thermisches Durchgehen der Batterie 12 und kann im Gesamtverlauf des Prozesses Zeit sparen. Insbesondere wird somit im dritten Zeitschritt S3, nach Erreichen der Schlussspannung V_{SoC0%} laut Datenblatt, mit der geringeren Stromstärke, zum Beispiel 0,5 C bis zu einer vordefinierten negativen Schlussspannung tiefenentladen. Dabei findet die Umpolung der Batterie 12 statt. Als Entladeschlussspannung kann hier direkt die maximal gewünschte negative Schlussspannung gewählt werden. Für gealterte Batterien 12 hat es sich gezeigt, dass diese Spannung aufgrund von kinetischen Hemmungen innerhalb der Batterie 12 nicht direkt erreicht werden kann. In der Regel wird beim ersten Umpolungsschritt nur eine geringere Spannung V_{Step1} erreicht. Für Batterien mit einem hohen State of Health, zum Beispiel fabrikneu, kann ein Umpolungsschritt ausreichen, um die maximale negative Schlussspannung zu erreichen. Die gewählte Stromstärke richtet sich nach den Eigenschaften der Batterie 12. Je höher die Stromstärke gewählt wird, desto schneller kann der Prozess stattfinden. Zu hohe Entladestromwerte können jedoch zu einer Überhitzung der Batterie 12 führen. Wenn die Temperatur der Batterie 12 ein definiertes Maximum überschreitet, so kann die Entladung beziehungsweise Umpolung unterbrochen werden, um die Batteriespannung relaxieren zu lassen und die Temperatur abzuführen.

Die im dritten Zeitschritt S3 erreichte negative Entladeschlussspannung V_{Step1} wird für einen definierten Zeitraum gehalten. Auch wenn durch Hemmungen aufgrund der Kinetik, Polarisation und/oder Diffusionseffekte für gealterte Batterien 12 die maximal definierte negative Schlussspannung nicht erreicht wird, finden schon kinetische Prozesse innerhalb der Batterie 12 statt, die zum Beispiel die Dissolution von Kupferionen oder der Kupferfolie des Stromsammlers an der Anode zu verzeichnen sind. Dies ist dem internen Kurzschluss der Batterie 12 zuträglich. Die Haltedauer der negativen Spannung kann variieren. Eine kürzere Haltedauer, besonders für gealterte Batterien, lässt einen schnelleren Übergang in den zweiten Umpolungsschritt zu, bei dem in der Regel eine niedrigere Schlussspannung erreicht werden kann, wodurch der interne Kurzschluss zügiger stattfinden kann.

Im fünften Zeitschritt S5, insbesondere um Polarisations- oder Diffusionseffekte in den Batterien 12 abzubauen, wird in einen ersten Relaxationsschritt übergegangen. Die dadurch erreichte Relaxationsspannung V_{Relax1} reicht in der Regel besonders bei gealterten Batterien 12 nicht für eine gefahrlose Weiterverarbeitung aus. In der Relaxationsphase sinken sowohl die Spannung der Batterie 12 als auch die Temperatur ab. Die Durchführung von mehreren Relaxationsschritten wirkt sich dadurch positiv auf die Prozesssicherheit aus, kann jedoch mehr Zeit kosten.

In einem sechsten Zeitschritt S6, welcher insbesondere einem zweiten Umpolungsschritt entspricht, wird mit einer definierten Stromstärke, die zum Beispiel der des ersten Umpolungsschritts entspricht, bis zu einer negativen Entladeschlussspannung V_{Step2} entladen. Diese Spannung kann durch den Abbau der Hemmungseffekte im fünften Zeitschritt S5 zügig erreicht werden und ist für gealterte Batterien in der Regel niedriger als beim ersten Umpolungsschritt, wodurch der interne Kurzschluss der Batterie 12 schneller herbeigeführt werden kann. V_{Step2} kann für eine bestimmte Zeit gehalten werden, bevor wieder relaxiert wird. Eine Regelung der Dauer könnte alternativ auch über die Stromstärke stattfinden. Sind durch die Umpolung der Batterie 12 ausreichend elektrisch leitfähige Pfade zwischen den Elektroden entstanden, um einen Kurzschluss zu verursachen, steigt der Strom betragsmäßig an, um die Zielspannung halten zu können. Hier kann zum Beispiel bei Überschreitung des Schwellwerts der Halteprozess der Spannung abgebrochen und in die Relaxation übergegangen werden.

Im vorliegenden siebten Zeitschritt S7 relaxiert die Spannung V_{Relax2} zügiger als zuvor bis zu einem stabilen Wert von null Volt. Über die Steigung der Relaxationskurve kann zeitnah bestimmt werden, ob die Umpolung erfolgreich war. Eine erfolgreiche Durchführung der Tiefenentladung mit Umpolung sorgt dafür, dass die Batterie 12 gefahrlos weiterverarbeitet werden kann.

Sollte die Spannung auf einen nicht zufriedenstellenden Wert ansteigen, bei dem eine Gefährdung von Personal und Maschinen nicht ausgeschlossen werden kann, können zusätzliche Umpolungsschritte erfolgen. Diese können sich dabei an dem bereits beschriebenen Prozess orientieren. Insbesondere kann eine Entladung im negativen Bereich bis zur bekannten Schlussspannung V_{Step2} durchgeführt werden. Dabei bekommt die Batterie 12 zusätzlich Zeit, um alle Vorgänge im Inneren, die während der Umpolung stattfinden, abzuschließen. Dies führt zur schlussendlichen Deaktivierung.

Ferner kann eine Entladung im negativen Bereich bei einem niedrigeren Schlussspannungswert als V_{Step2} realisiert werden. Hierbei wird sichergestellt, dass die Prozesse im Inneren der Batterie, wie zum Beispiel die Ausbildung von elektrisch leitfähigen Kupferbrücken, während der Umpolung vollständig stattfinden können. Wenn die Batterie 12 beispielsweise bedingt durch ihre Historie beziehungsweise ihr Einsatzgebiet andere Eigenschaften als bekannt aufweist, kann dies hilfreich sein. Eine instantane Tiefenentladung 16 bis zu den hier vorgeschlagenen negativen Spannungen kann zu einem unkontrollierten Temperaturanstieg führen. Für die Prozesssicherheit ist es also zuträglich, wenn eine Verringerung der Entladeschlussspannung schrittweise erfolgt.

Insbesondere zeigt somit die FIG 2 das Verfahren zum Durchführen der Tiefenentladung 16. Es wird zumindest die Batterie 12 mit dem entleerten Ladezustand gemäß dem zweiten Zeitschritt S2 bereitgestellt. Es erfolgt dann das Anlegen eines vorgegebenen ersten Entladestroms 18 an die entleerte Batterie 12 mittels der elektronischen Recheneinrichtung 14 bis zu einem vorgegebenen ersten Spannungswert 20 und das Umpolen der Batterie 12 mittels der Tiefenentladungsvorrichtung 10 bei Erreichen des vorgegebenen ersten Spannungswerts 20. Es erfolgt dann das Anlegen eines zweiten Entladestroms, welcher beispielsweise dem ersten Entladestrom 18 im Wesentlichen entsprechen kann, bei umgepolter Batterie 12 bis zu einem vorgegebenen zweiten Spannungswert 22, wobei der zweite Spannungswert 22 ein negativer Spannungswert ist, mittels der elektronischen Recheneinrichtung 14.

Dabei kann der erste Spannungswert 20 im Wesentlichen null Volt betragen. Ferner kann als zweiter Spannungswert 22 im Wesentlichen eine negative Schlussspannung der Batterie 12 vorgegeben werden. Nach Erreichen des zweiten Spannungswerts 22 kann insbesondere eine Relaxation 24 der Batterie 12 durchgeführt werden. Nach der Relaxation 24 kann ein dritter Spannungswert 26 der Batterie 12 bestimmt werden. Sollte der dritte Spannungswert 26 einen vorgegebenen Schwellwert überschreiten, kann erneut ein weiterer Entladestrom 28 angelegt werden und eine Umpolung beim Erreichen des ersten Spannungswerts 20 durchgeführt werden.

Dabei kann insbesondere mittels der Tiefenentladungsvorrichtung 10 die Batterie 12 vor der Tiefenentladung 16 bis zum entleerten Ladezustand gemäß den Zeitschritten S1 und S2 entsprechend entladen werden.

Weiterhin kann vorgesehen sein, dass zumindest während der Tiefenentladung eine Temperatur der Batterie 12 überwacht wird.

Ebenfalls kann vorgesehen sein, dass bei Erreichen des zweiten Spannungswerts 22 der zweite Spannungswert 22 von dem vordefinierten Zeitraum gehalten wird.

Insbesondere die negativen Schlussspannungen der Zeitschritte S4 und S6 richten sich nach der Gesamtspannung der zu entladenden Batterie 12. Diese sollte im Bereich von -100 bis - 1000 Millivolt pro Modul/Pack verbauter Einzelzelle liegen. Im Vergleich zur Betriebsspannung einer Lithium-Ionen-Zelle, insbesondere bei etwa 3,2 bis 3,7 Volt, abhängig von der verwendeten Kathodenchemie, genügen also schon geringe Spannungen im negativen Bereich, um von den Effekten der Umpolung zu profitieren. Bei der Wahl des negativen Spannungsbereichs gilt, um bei gealterten Batterien Hemmungen aufgrund von Polarisation und Diffusion innerhalb der Zellen zu umgehen, ist eine in Stufen stattfindende Umpolung mit zwischenzeitlichen Relaxationsschritten vorteilhaft. Bei den einzelnen Stufen kann der negative Spannungsbereich beziehungsweise die gehaltene Ladungsspannung aus dem vierten Zeitschritt S4 angepasst werden, um extreme Temperaturanstiege zu vermeiden. Über die Relaxationsschritte können außerdem regelmäßig innere Hemmungen der Batterie abgebaut sowie Temperatur abgeführt werden. Die Entladestufen sollten sich innerhalb vorgegebener Strom- und Spannungsbereiche befinden. Die Entladeelektronik muss deshalb den Strom und die Spannung kontrollieren können. Der Entladestrom sollte abhängig vom Zelltyp im Bereich von 0,1 bis 2 C liegen. Als vorteilhaft hat sich beispielsweise ein Entladestrom von 0,5 C für eine Batterie mit Nickel-Mangan-Kobalt-Oxid beziehungsweise Lithium-Eisen-Phosphat-Kathode erwiesen.

Durch die Umpolung der Batterie 12 wird im Regelfall jede einzelne Batterie 12 innerhalb einer Batterie umgepolt, was dazu führt, dass die Spannung nach Lösen der Kontaktierung deutlich schneller relaxiert, sodass eine Sicherheitsabschätzung bei einem Verfahren mit mehreren Schritten zügig erfolgen kann. Nach erfolgreichem Abschluss des Prozesses kann die Relaxationsspannung bei nahezu null Volt liegen, sodass ein Verbleib von Restenergie bei der Weiterverarbeitung der Batterie 12 vermieden wird.

Befindet sich die Batterie 12 in einem negativen Spannungsbereich und es liegen negative Ströme an, so wird der Batterie Energie zugeführt. Dies sorgt dafür, dass die nötige Energie, die zur Entstehung des inneren Kurzschlusses nötig ist, zum Beispiel zur Korrosion des Stromableiters und der Ionenwanderung zur Verfügung gestellt wird. Außerdem ist für die Umpolungsschritte eine Rekuperation von Energie mittels Zwischenkreis denkbar. Hierbei kann die Energie, die bei der Entladung der Batterie 12 in einem Spannungsbereich größer null Volt entnommen wird, zur Durchführung der Umpolung genutzt werden.

Weiterhin kann vorgesehen sein, dass vor dem Durchführen der Tiefenentladung 16 ein Gesundheitszustand der Batterie 12 bestimmt und kategorisiert wird und in Abhängigkeit von dem bestimmten Gesundheitszustand die Tiefenentladung 16 durchgeführt wird. Hierzu kann beispielsweise vorgesehen sein, dass, wie bereits erwähnt, bevor die Tiefenentladung 16 mit der Umpolung der Batterie 12 zum internen Kurzschluss durchgeführt wird, die optionale Sicherheitsbewertung des Prozesses stattfinden. Dabei wird insbesondere der State of Health (SoH - Gesundheitszustand) der Batterie 12 und/oder gezielt von einzelnen Batterien der Batterie abgeschätzt sowie der Zellinnenwiderstand bestimmt.

Hierzu kann beispielsweise eine Kapazitätsbestimmung durchgeführt werden. Nach Angaben des Datenblatts zur Batterie 12 wird unterhalb des maximal verträglichen Stroms und unterhalb der tolerierbaren Spannungsgrenzen die Entladekapazität, insbesondere Ladungsmenge bei der Entladung von SoC 100 Prozent bis null Prozent, bestimmt und mit der Nennkapazität aus dem Datenblatt verglichen. Der prozentuale Anteil der Entladekapazität von der Nennkapazität definiert den Gesundheitszustand.

Ferner kann eine Innenwiderstandsbestimmung durchgeführt werden. Für eine definierte Zeit, zum Beispiel eine Minute, wird ein positiver oder negativer Strom, dessen maximale Intensität dem Datenblatt entnommen werden kann, an die Batterie 12 angelegt. Nach Ablauf dieser Zeit findet eine plötzliche Spannungsrelaxation statt, sodass nach dem ohmschen Gesetz R = dU/dl der Innenwiderstand der Batterie 12 berechnet und mit den Angaben im Datenblatt verglichen werden kann.

Ferner ist auch eine elektrochemische Impedanzmessung möglich. In einem definierten Frequenzbereich, zum Beispiel von zehn Kilohertz bis ein Hertz, wird bei einer bestimmten stromgesteuerten Anregung, Amplitude, die sich an der Kapazität der Batterie orientiert, zum Beispiel C/20, ein Impedanzspektrum aufgenommen. Basierend auf den Daten dieses Spektrums können Kennwerte bei bestimmten Frequenzen, zum Beispiel ein Kilohertz, mit den Angaben im Datenblatt abgeglichen werden. Für eine detailliertere Analyse kann auch der Kurvenverlauf der Daten mithilfe eines Fittings analysiert werden. Dies ist besonders hilfreich, wenn bereits Daten zu elektrochemischen Impedanzen des untersuchten Batterietyps vorliegen. Ein Vergleich ergibt dann Unregelmäßigkeiten, die zu einer Entscheidungsfindung herangezogen werden können.

Alle beschriebenen Messverfahren liefern eine Datengrundlage, um zu entscheiden, ob eine Batterie 12 dem hier vorgeschlagenen Tiefenentladungsverfahren mit Umpolung unterzogen werden kann. Die Entscheidung in Ordnung oder nicht in Ordnung kann aufgrund eines einzelnen Parameters oder mehrerer Parameter in Kombination getroffen werden. Es hat sich gezeigt, dass eine einfache Bestimmung des Gesundheitszustands auf Basis von Kapazitätsdaten keine hinreichende Aussage über die Entladeeigenschaften der Batterie 12 gibt. Auch Batterien 12 mit einem hohen Gesundheitszustand können beispielsweise bei hohen Innenwiderständen Probleme bei der Tiefenentladung 16 mit Umpolung bereiten. Das beschriebene Verfahren ist allerdings optional. Es können auch alle Batterien 12 dem Tiefenentladungsverfahren mit Umpolung unterzogen werden, allerdings ist dabei nicht gewährleistet, dass das Verfahren erfolgreich ist.

Dabei lassen sich die Batterien 12 in drei Gesundheitszustände kategorisieren. Ein erster Gesundheitszustand kann gesund sein. Die Batterie 12 verfügt dabei über einen hohen Gesundheitszustand von größer 95 Prozent sowie einen niedrigen Innenwiderstand, wobei als niedrig definiert wird, was der Angabe im Datenblatt mit einer geringen Abweichung, zum Beispiel plus zehn Prozent, entspricht. Mittels einer Impedanzspektroskopie lassen sich nur geringe Anomalien im Vergleich zu einer fabrikneuen, qualitativ hochwertigen Zelle, welche in einem vorherigen Verfahren als in Ordnung eingestuft wurde, erkennen.

Ein zweiter Gesundheitszustand kann gealtert sein. Die Batterie 12 verfügt über einen niedrigeren Gesundheitszustand als eine gesunde Zelle, da sie schon einige Zeit eingesetzt wurde, zum Beispiel in einem batteriebetriebenen Kraftfahrzeug. Der Innenwiderstand allerdings entspricht dem Datenblatt beziehungsweise zeigt nur geringe Abweichungen zur Angabe, zum Beispiel plus zehn Prozent. Die Analyse der Impedanzspektroskopie zeigt keine Auffälligkeiten verglichen mit einer Batterie, die einen ähnlichen Alterungszustand aufweist und zuvor als in Ordnung eingestuft wurde.

Ferner kann die Batterie 12 auch als korrupt eingestuft werden. Hierbei verfügt die Batterie 12 in der Regel über einen niedrigeren SoH als eine gesunde Zelle, da sie entweder bereits eingesetzt oder unter fehlerhaften Bedingungen produziert wurde. In Einzelfällen kann auch eine Batterie 12 mit einem Gesundheitszustand von 100 Prozent als korrupt eingestuft werden. Eine korrupte Batterie 12 wird so klassifiziert, wenn sie für das Tiefenentladeverfahren mit Umpolung aufgrund von Erfahrungswerten oder verdächtigen Qualitätsmerkmalen als ungeeignet eingestuft wird. Zusätzlich weist die Batterie 12 Anomalien bei der Bestimmung des Zellinnenwiderstands auf. Diese Abweichungen von einer gesunden oder gealterten Batterie 12 können verschiedenen Ursprungs sein. Bei einer Bestimmung mittels DC-Pulses kann der Innenwiderstand nach verschiedenen Abklingzeiten berechnet und mit dem Wert im Datenblatt beziehungsweise den eigenen Erfahrungswerten verglichen werden. Eine Bestimmung mittels der Impedanzspektroskopie erlaubt ebenso die Ermittlung von Widerstandswerten bei unterschiedlichen Anregungsfrequenzen. Diese Werte können entweder mit dem Datenblatt oder mit den Erfahrungswerten für gesunde und gealterte Batterien 12 abgeglichen werden.

Insbesondere lediglich die Batterien 12 der Kategorie gesund und gealtert werden für die Tiefenentladung 16 mit Umpolung geeignet sein. Die Batterien der Kategorie 3 (korrupt) können nicht mittels der vorgeschlagenen Methode deaktiviert werden.

### Bezugszeichenliste

- 10: Tiefenentladungsvorrichtung
- 12: Batterie
- 14: elektronische Recheneinrichtung
- 16: Tiefenentladung
- 18: erster Entladestrom
- 20: erster Spannungswert
- 22: zweiter Spannungswert
- 24: Relaxation
- 26: dritter Spannungswert
- 28: weiterer Entladestrom
- V: Spannung
- I: Strom
- t: Zeit

## Patentansprüche

1. Verfahren zum Durchführen einer Tiefenentladung (16) einer Batterie (12) mittels einer Tiefenentladungsvorrichtung (10), mit den Schritten:
- Bereitstellen der Batterie (12) mit einem entleerten Ladezustand (V_{SoC0%});
- Anlegen eines vorgegebenen ersten Entladestroms (18) an die entleerte Batterie (12) mittels einer elektronischen Recheneinrichtung (14) der Tiefenentladungsvorrichtung (10) bis zu einem vorgegebenen ersten Spannungswert (20) der Batterie (12);
- Umpolen der Batterie (12) mittels der Tiefenentladungsvorrichtung (10) bei Erreichen des vorgegebenen ersten Spannungswerts (20); und
- Anlegen eines zweiten Entladestroms (18) bei umgepolter Batterie (12) bis zu einem vorgegebenen zweiten Spannungswert (22), wobei der zweite Spannungswert (22) ein negativer Spannungswert ist, mittels der elektronischen Recheneinrichtung (14).

2. Verfahren nach Anspruch 1, **dadurch gekennzeichnet, dass** als erster Spannungswert (20) im Wesentlichen 0 Volt vorgegeben werde.

3. Verfahren nach Anspruch 1 oder 2, **dadurch gekennzeichnet, dass** als zweiter Spannungswert (22) im Wesentlichen eine negative Schlussspannnung der Batterie (12) vorgegeben wird.

4. Verfahren nach einem der vorhergehenden Ansprüche, **dadurch gekennzeichnet, dass** nach Erreichen des zweiten Spannungswerts (12) eine Relaxation (24) der Batterie (12) durchgeführt wird.

5. Verfahren nach Anspruch 4, **dadurch gekennzeichnet, dass** nach der Relaxation (24) ein dritter Spannungswert (26) der relaxierten Batterie (12) bestimmt wird.

6. Verfahren nach Anspruch 5, **dadurch gekennzeichnet, dass**, sollte der dritte Spannungswert (26) einen vorgegebenen Schwellwert überschreiten, erneut ein Entladestrom (28) angelegt wird und eine Umpolung beim Erreichen des ersten Spannungswerts (20) durchgeführt wird.

7. Verfahren nach einem der vorhergehenden Ansprüche, **dadurch gekennzeichnet, dass** mit einer C-Rate zwischen 0,1 C und 2,0 C, insbesondere mit 0,5 C, die Batterie (12) entladen wird.

8. Verfahren nach einem der vorhergehenden Ansprüche, **dadurch gekennzeichnet, dass** mittels der Tiefenentladungsvorrichtung (10) die Batterie (12) vor der Tiefenentladung (16) bis zum entleerten Ladezustand (V_{SoC0%}) entladen wird.

9. Verfahren nach Anspruch 8, **dadurch gekennzeichnet, dass** mit einer C-Rate zwischen 0,5 C und 3 C, insbesondere mit 1 C, die Batterie (12) entladen wird.

10. Verfahren nach einem der vorhergehenden Ansprüche, **dadurch gekennzeichnet, dass** zumindest während der Tiefentladung (16) eine Temperatur der Batterie (12) überwacht wird.

11. Verfahren nach einem der vorhergehenden Ansprüche, **dadurch gekennzeichnet, dass** bei Erreichen des zweiten Spannungswerts (20) der zweite Spannungswert (20) für einen vordefinierten Zeitraum gehalten wird.

12. Verfahren nach einem der vorhergehenden Ansprüche, **dadurch gekennzeichnet, dass** vor dem Durchführen der Tiefenentladung (16) ein Gesundheitszustand der Batterie (12) bestimmt und kategorisiert wird und in Abhängigkeit von dem bestimmten Gesundheitszustand die Tiefenentladung (16) durchgeführt wird.

13. Computerprogrammprodukt mit Programmcodemittel, welche eine elektronische Recheneinrichtung (14) dazu veranlassen, wenn die Programmcodemittel von der elektronischen Recheneinrichtung (14) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Tiefenentladungsvorrichtung (10) zum Durchführen einer Tiefenentladung (16) einer Batterie (12), mit zumindest einer elektronischen Recheneinrichtung (14), wobei die Tiefenentladungsvorrichtung (10) zum Durchführen eines Verfahrens nach einem der Ansprüche 1 bis 12 ausgebildet ist.
